# EUROPÄISCHE PATENTSCHRIFT

(11) **EP 0 976 604 B1**
(45) Veröffentlichungstag und Bekanntmachung des Hinweises auf die Patenterteilung: **14.05.2003**
(21) Anmeldenummer: 99113013.9
(22) Anmeldetag: 06.07.1999
(51) Int. Cl.: B60K 41/06

(54) **Verfahren zur Beeinflussung des Drehmoments einer Brennkraftmaschine**
Method for deriving target torque of an internal combustion engine
Procédé pour déterminer une valeur du couple désirée dans un moteur à combustion interne

(30) Priorität: 31.07.1998 DE 19834532
(43) Veröffentlichungstag der Anmeldung: 02.02.2000
(73) Patentinhaber: Bayerische Motoren Werke Aktiengesellschaft, 80788 München (DE)
(72) Erfinder: Stocker, Franz, 82229 Seefeld (DE)
(74) Vertreter: Wesel-Mair, Julia (DE)

(56) Entgegenhaltungen:
- DE-A- 4 304 779
- US-A- 5 490 815

## Beschreibung

Die Erfindung bezieht sich auf ein Verfahren zur Beeinflussung des Drehmoments einer Brennkraftmaschine bei einem Kraftfahrzeug mit einem automatischen Stufengetriebe, mit einem hydrodynamischen Wandler, mit einer Getriebeölpumpe, mit einem elektronischen Brennkraftmaschinensteuergerät und mit einem elektronischen Getriebesteuergerät. Zum technischen Hintergrund wird auf die DE-A-197 26 194 hingewiesen.

Die DE-A- 43 04 779 als nächstkommender Stand der Technik offenbart in Übereinstimmung mit den Merkmalen der vorliegenden Anmeldung folgende Maßnahmen:
*Verfahren zur Beeinflussung des Drehmoments einer Brennkraftmaschine bei einem Kraftfahrzeug*
   - *mit einem automatischen Stufengetriebe,*
   - *mit einem hydrodynamischen Wandler,*
   - *mit einer Getriebeölpumpe,*
   - *mit einem elektronischen Brennkraftmaschinen- und Getriebesteuergerät,*
   - *wobei das Brennkraftmaschinen- und Getriebesteuergerät in Abhängigkeit von ihm vorliegenden Eingangssignalen ein Getriebeeingangsmoment unter Berücksichtigung eines Wandlermoments und eines Parameters, der von dem Getriebeöl abhängig ist, ermittelt, das zur Kompensierung eines Verlustmoments dient.*

Ein ähnliches Verfahren ist beispielsweise aus der DE 29 35 916 C2 im Zusammenhang mit einem üblichen Aufbau eines Kraftfahrzeugs, das mit einem elektronisch gesteuerten Automatikgetriebe ausgestattet ist, bekannt. Zur Funktionsweise elektronisch gesteuerter Automatikgetriebe mit hydrodynamischem Wandler wird beispielsweise auf die Seiten 460 bis 470 des Kraftfahrtechnischen Taschenbuchs der Fa. Bosch (20. Auflage, VDI-Verlag, 1987) verwiesen. Bekannte elektronisch gesteuerte Automatikgetriebe weisen bisher zur Erhöhung der Schaltqualität während eines Gangwechsels ein Verfahren zur Beeinflussung des Drehmoments einer Brennkraftmaschine in Form einer Reduzierung des Drehmoments auf. Ein derartiges Verfahren zur Beeinflussung des Drehmoments einer Brennkraftmaschine setzt voraus, daß ein elektronisches Brennkraftmaschinensteuergerät als Partner für ein elektronisches oder auch hydraulisches Getriebesteuergerät vorhanden ist. Ein derartiges bekanntes Verfahren zur Beeinflussung des Drehmoments einer Brennkraftmaschine hat zum Ziel, das Drehmoment der Brennkraftmaschine (Motormoment) während der Gangwechsel nach Größe und zeitli-chem Verlauf derart zu reduzieren, daß der Schaltruck möglichst klein bleibt und die Synchronisation des Getriebes unterstützt wird. Eine derartige Reduzierung des Drehmoments einer Brennkraftmaschine wird im Zusammenhang mit bekannten elektronischen Getriebesteuerungen auch als Motoreingriff bezeichnet (vgl. z. B. auch ATZ-Artikel "Elektronische Getriebesteuerung von Bosch", 1992, Seite 424 ff.). Bisher wird dieser sogenannte Motoreingriff durch ein digitales Signal, d. h. durch einen Wechsel von einem High- auf ein Low-Signal oder umgekehrt, vom Getriebesteuergerät als Momentenreduzierungs-Anforderung an das Brennkraftmaschinensteuergerät ausgelöst. Das Ausmaß der Reduzierung des Drehmoments wird im Brennkraftmaschinensteuergerät selbst in Abhängigkeit von momentanen Motordaten berechnet.

Ein weiteres Verfahren zur Beeinflussung des Drehmoments einer Brennkraftmaschine ist ebenfalls im Zusammenhang mit elektronisch gesteuerten Automatikgetrieben, insbesondere bei einem Anfahrvorgang bekannt, bei dem das Brennkraftmaschinensteuergerät in etwa die Drehmomentenaufnahme des hydrodynamischen Wandlers (Wandlermoment) abschätzt und die Beeinflussung des Drehmoments der Brennkraftmaschine in Form einer Erhöhung des Drehmoments zum Überwinden des Verlustmoments durch das Wandlermoment vorsteuert.

Die bisher bekannten Verfahren zur Beeinflussung des Drehmoments einer Brennkraftmaschine durch ein Brennkraftmaschinensteuergerät in Zusammenhang mit einem elektronisch gesteuerten Automatikgetriebe weisen die Gemeinsamkeit auf, daß die notwendige Beeinflussung des Drehmoments der Brennkraftmaschine ausschließlich in Abhängigkeit von Betriebsgrößen des Brennkraftmaschinensteuergeräts vorgegeben wird, obwohl sich die Beeinflussung des Drehmoments der Brennkraftmaschine auf den gesamten Antriebsstrang auswirkt. Auch hängt die notwendige Beeinflussung des Drehmoments der Brennkraftmaschine zum Erreichen eines optimalen Fahrkomforts maßgeblich von Betriebsgrößen des Automatikgetriebes, einschließlich des hydrodynamischen Wandlers und der Getriebeölpumpe, ab.

Es ist daher Aufgabe der Erfindung, ein Verfahren zur Beeinflussung des Drehmoments der Brennkraftmaschine eingangs genannter Art derart zu verbessern, daß ein optimaler Fahrkomfort erreicht wird und die Signale vorhandener elektronischer Steuergeräte hierfür optimal ausgenutzt werden.

Diese Aufgabe wird durch die Merkmale des Patentanspruchs gelöst.

Erfindungsgemäß überträgt das elektronische Getriebesteuergerät ihm vorliegende Eingangssignale an das Brennkraftmaschinensteuergerät, welches in Abhängigkeit von diesen Eingangssignalen ein Getriebeeingangsmoment als Summe eines Wandlermoments und eines Getriebeölpumpenmoments zur Kompensierung des Verlustmoments ermittelt. Das Getriebeölpumpenmoment wird in Abhängigkeit von den Eingangssignalen Motordrehzahl (= Drehzahl der Brennkraftmaschine), Getriebeölpumpendruck und Getriebeöltemperatur berechnet. Ergänzend wird darauf hingewiesen, daß die Pumpendrehzahl des Wandlers identisch mit der Motordrehzahl und der Drehzahl der Getriebeölpumpe ist.

Vorzugsweise wird das Wandlermoment in Abhängigkeit von der Turbinendrehzahl des Wandlers, der Pumpendrehzahl des Wandlers und der Getriebeöltemperatur, ermittelt. Diese drei Größen liegen üblicherweise als Eingangssignale am Getriebesteurgerät an.

Die dem Getriebesteuergerät vorliegenden Eingangssignale werden über eine elektrische Signalleitung oder über einen elektronischen Datenbus an das Brennkraftmaschinensteuergerät übermittelt. Dieses ermittelt das Getriebeeingangsmoment als Summe des Wandlermoments und des Getriebeölpumpenmoments.

Das Getriebeeingangsmoment wird als Verlustmoment im Brennkraftmaschinensteuergerät berücksichtigt. Dabei wird das Drehmoment der Brennkraftmaschine in Form einer Erhöhung des Drehmoments derart vorgesteuert, daß zumindest dieses Verlustmoment kompensiert wird. Hierdurch wird insbesondere bei einem Anfahrvorgang mit einem Automatikgetriebe der Komfort erhöht, da ein ungewollter Einbruch des Drehmoments der Brennkraftmaschine aufgrund der erhöhten Momentenanforderung frühzeitig verhindert wird. Das erfindungsgemäße Verfahren kann jedoch auch mit weiteren Verfahren zur Beeinflussung des Drehmoments einer Brennkraftmaschine in Abhängigkeit von anderen Kraftfahrzeugfunktionen zusammenwirken. Die Beeinflussung des Drehmoments der Brennkraftmaschine wird insbesondere durch die Veränderung der Einspritzmenge, der Luftmenge und/oder des Zündwinkels über das Brennkraftmaschinensteuergerät realisiert. Die Ermittlung oder Berechnung des zu kompensierenden Verlustmoments im Brennkraftmaschinensteuergerät ist insbesondere dann von Vorteil, wenn die Ermittlung oder Berechnung im Getriebesteuergerät aus Kapazitätsgründen nicht oder nur schwer möglich ist.

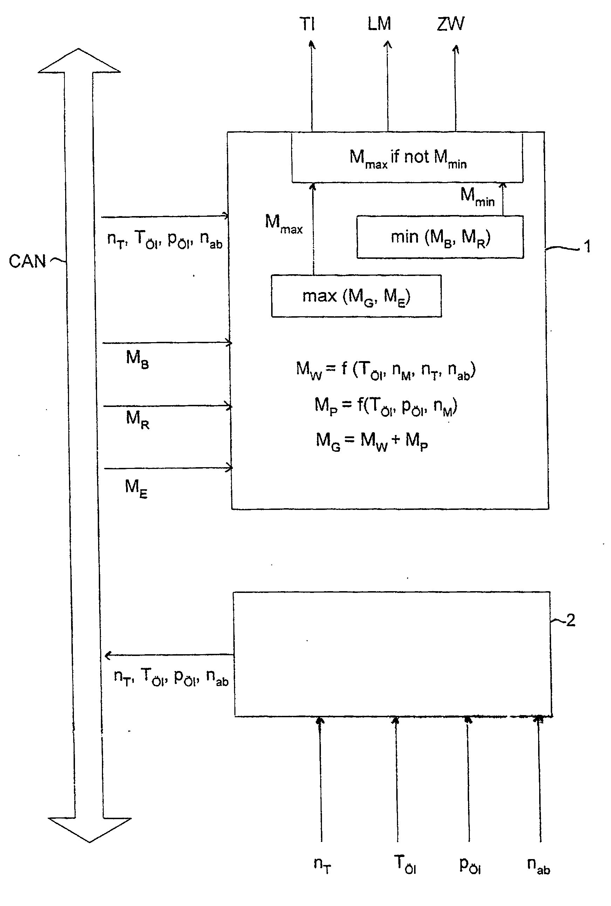

In der Zeichnung ist ein Ausführungsbeispiel der Erfindung dargestellt.

Es zeigt das Zusammenwirken und die Funktionsweise eines Brennkraftmaschinensteuergeräts und eines Getriebesteuergeräts, die beide über einen Datenbus verbunden sind.

An einem Datenbus CAN ist zum einen ein elektronisches Brennkraftmaschinensteuergerät 1 und zum anderen ein elektronisches Getriebesteuergerät 2 angeschlossen. Die Steuergeräte 1 und 2 können sowohl über die Datenbusleitung CAN als auch über weitere Eingänge Eingangssignale erhalten. Auch die Ausgangssignale der Steuergeräte 1 und 2 können sowohl über die Datenbusleitung CAN als auch über andere Ausgänge übermittelt werden.

Zur Beeinflussung des Drehmoments der Brennkraftmaschine weist das Brennkraftmaschinensteuergerät 1 drei Ausgänge auf, über die die Einspritzmenge TI, die Luftmenge oder -masse LM und/oder der Zündwinkel ZW zum Erreichen eines gewünschten Drehmoments der Brennkraftmaschine entsprechend eingestellt werden können. Weiterhin besitzt das Brennkraftmaschinensteuergerät 1 eine Information über die Brennkraftmaschinendrehzahl (Motordrehzahl) n_{M}. Die Brennkraftmaschinendrehzahl n_{M} ist identisch mit der Pumpendrehzahl des Wandlers.

Zur Beeinflussung des Drehmoments der Brennkraftmaschine, insbesondere zur Erhöhung des Drehmoments der Brennkraftmaschine zum Kompensieren des Getriebeeingangsmoments als Verlustmoment, ermittelt das Brennkraftmaschinensteuergerät 1 insbesondere den Wert dieses Getriebeeingangsmoments M_{G}. Wird beispielsweise durch eine andere Kraftfahrzeugfunktion ein weiteres Moment M_{E} an das Brennkraftmaschinensteuergerät 1 übermittelt, um eine Erhöhung des Drehmoments der Brennkraftmaschine anzufordern, wird vorzugsweise eine Maximalauswahl der angeforderten Momentenerhöhungen getroffen, woraus sich ein Maximummoment Mₘₐₓ als Vorsteuerwert ergibt. Es ist jedoch auch möglich, daß weitere Kraftfahrzeugsysteme Anforderungen , M_{B} und M_{R}, zur Reduzierung des Drehmoments der Brennkraftmaschine an das Brennkraftmaschinensteuergerät 1 übermitteln, wonach aus diesen Reduzierungsanforderungen eine Minimalauswahl getroffen wird. Das sich hieraus ergebende Minimummoment Mₘᵢₙ wird in diesem Fall vorrangig eingestellt. Liegt jedoch keine Anforderung zur Reduzierung des Drehmoments der Brennkraftmaschine, z. B. in Form der Momente M_{B} und M_{R}, vor, wird das Maximummoment Mₘₐₓ eingestellt.

Das Getriebeeingangsmoment M_{G} wird im Brennkraftmaschinensteuergerät 1 als Summe des Wandlermoments M_{W} und des Getriebeölpumpenmoments M_{P} berechnet. Das Wandlermoment M_{W} wird in Abhängigkeit von der Getrieböltemperatur T_{Öl}, der Brennkraftmaschinendrehzahl n_{M} bzw. der Pumpendrehzahl des Wandlers, der Turbinendrehzahl n_{T} sowie der Getriebeabtriebsdrehzahl n_{ab} ermittelt. Ergänzend wird darauf hingewiesen, daß das Wandlermoment M_{W} beim Stand der Technik im Brennkraftmaschinensteuergerät 1 lediglich geschätzt wird, da dem Brennkraftmaschinensteuergerät 1 die Turbinendrehzahl n_{T} des Wandlers nicht als Eingangssignal vorliegt.

Darüber hinaus wird im Brennkraftmaschinensteuergerät 1 das Getriebeölpumpenmoment M_{P} in Abhängigkeit von der Getriebeöltemperatur T_{Öl}, dem Getriebeölpumpendruck p_{Öl} und der Motordrehzahl n_{M} ermittelt. Die Motordrehzahl n_{M} ist gleich der Drehzahl der Getriebeölpumpe und liegt im Brennkraftmaschinensteuergerät 1 vor. Das Getriebeölpumpenmoment M_{P} wird beim Stand der Technik bisher nicht berücksichtigt. Demnach wird durch die Berechnung des Getriebeeingangsmoments M_{G} als Summe des Wandlermoments M_{W} und des Getriebeölpumpenmoments M_{P} zur Bestimmung des durch die Beeinflussung des Drehmoments der Brennkraftmaschine zu kompensierenden Verlustmoments eine höhere Genauigkeit und damit ein höherer Fahrkomfort erreicht.

Die zur Ermittlung des Getriebeingangsmoments notwendigen Eingangssignale (n_{T}, T_{Öl}, p_{Öl}, n_{ab}), welche dem Getriebesteuergerät 2 zugeführt sind, werden vom Getriebesteuergerät 2 über den CAN-Bus an das Brennkraftmaschinensteuergerät 1 übermittelt.

## Patentansprüche

1. Verfahren zur Beeinflussung des Drehmoments einer Brennkraftmaschine bei einem Kraftfahrzeug
- mit einem automatischen Stufengetriebe,
- mit einem hydrodynamischen Wandler,
- mit einer Getriebeölpumpe,
- mit einem elektronischen Brennkraftmaschinensteuergerät
- und mit einem elektronischen Getriebesteuergerät,
- wobei das Getriebesteuergerät ihm vorliegende Eingangssignale (n_{T}, T_{Öl}, p_{Öl}, n_{ab}) über eine elektrische Signalleitung oder über einen elektronischen Datenbus an das Brennkraftmaschinensteuergerät weitergibt, welches in Abhängigkeit von diesen Eingangssignalen (n_{T}, T_{Öl}, p_{Öl}, n_{ab}, n_{M}) ein Getriebeeingangsmoment (M_{G}) als Summe eines Wandlermoments (M_{W}) und eines Getriebeölpumpenmoments (M_{P}) zur Kompensierung des Verlustmoments ermittelt, und
- wobei das Getriebeölpumpenmoment (Mp) in Abhängigkeit vom Getriebeölpumpendruck (p_{Öl}), von der Getriebeöltemperatur (T_{Öl}) und von der Drehzahl (n_{M}) der Getriebeölpumpe ermittelt wird.

## Claims

1. A method for regulating the torque of an internal combustion (internal combustion) engine in a motor vehicle:
• with an automatic stepped gearbox;
• with a hydrodynamic converter;
• with a gearbox oil pump;
• with an electronic internal combustion engine control unit;
• and with an electronic gearbox control unit;
• in which the input signals (n_{T}, T_{Ol}, p_{Ol}, n_{ab}) for the gearbox control unit are transmitted via an electrical signal line or an electronic databus to the internal combustion engine control unit, which determines a gearbox input torque (M_{G}) as a function of said input signals (n_{T}, T_{Ol}, p_{Ol}, n_{ab}) as the sum of a converter torque (M_{W}) and a gearbox oil pump torque (M_{P}) to compensate for the torque loss; and
• in which the gearbox oil pump torque (M_{P}) is determined as a function of the gearbox oil pump pressure (p_{Ol}), the gearbox oil temperature (T_{Ol}) and the speed (n_{M}) of the gearbox oil pump.

## Revendications

1. Procédé pour agir sur le couple d'un moteur à combustion interne d'un véhicule automobile comportant :
- une boîte de vitesses automatique,
- un convertisseur hydraulique,
- une pompe d'huile de transmission,
- un appareil électronique de commande du moteur,
- un appareil électronique de commande de la boîte,
**caractérisé en ce que**
- des signaux d'entrée (n_{T}, T_{öl}, P_{öl}, n_{ab}) se trouvant sur l'appareil de commande de la boîte sont transmis par l'intermédiaire d'un conducteur électrique de signaux, ou par un bus électronique de données, à l'appareil de commande du moteur qui en fonction de ces signaux d'entrée (n_{T}, T_{öl}, P_{öl}, n_{ab}, n_{M}) détermine un couple d'entrée de boîte (M_{G}) comme somme d'un couple de convertisseur (M_{W}) et d'un couple de pompe d'huile de transmission (M_{P}) pour compenser le couple de perte, et
- le couple de pompe d'huile de transmission (M_{P}) est déterminé en fonction de la pression (P_{öl}) de la pompe d'huile de transmission, de la température (T_{öl}) de cette huile et de la vitesse de rotation (n_{M}) de la pompe d'huile de transmission.
